## Europäisches Patentamt
## European Patent Office
## Office européen des brevets

(19)

(11) Veröffentlichungsnummer: **0 283 585 B1**

(12) **EUROPÄISCHE PATENTSCHRIFT**

(45) Veröffentlichungstag der Patentschrift: 27.02.91

(51) Int. Cl.⁵: **B60R 19/02**

(21) Anmeldenummer: 87118990.8

(22) Anmeldetag: 21.12.87

(54) **Stossfänger für Kraftfahrzeuge.**

(30) Priorität: 14.02.87 DE 3704652

(43) Veröffentlichungstag der Anmeldung:
28.09.88 Patentblatt 88/39

(45) Bekanntmachung des Hinweises auf die
Patenterteilung:
27.02.91 Patentblatt 91/09

(84) Benannte Vertragsstaaten:
**DE ES FR GB**

(56) Entgegenhaltungen:
EP-A- 0 096 355
EP-A- 0 158 236
FR-A- 2 198 433
GB-A- 1 213 696

(73) Patentinhaber: **REHAU AG + Co**
**Rheniumhaus**
**D-8673 Rehau(DE)**

(72) Erfinder: **Der Erfinder hat auf seine Nennung**
**verzichtet**

## Beschreibung

Die Erfindung betrifft einen Stoßfänger für Kraftfahrzeuge mit einem quer zur Fahrzeuglängsachse verlaufenden Mittelteil und Befestigungselementen, die eine begrenzte Verschiebung des mittelteils in der Fahrzeuglängsachse ermöglichen, wobei an den freien Enden des mittelteils einstükkig angeformte Endteile an-geordnet sind, deren selbständige ßefestigungselemente aus einem karosserieseitigen und aus einem stoßfängerseitigen Halteteil bestehen und eine begrenzte Verschiebemöglichkeit der Endstücke in Fahrzeuglängs- und Fahrzeugquerrichtung zulassen.

Ein derartiger Stoßfänger für Kraftfahrzeuge ist durch die DE- A - 32 21 293 bekannt geworden. Der dort beschriebene Stoß-fänger besitzt ein Mittelteil, welcher bei Einwirkung von Auf-prallenergie in Fahrzeuglängsrichtung verschieblich ist. An dieses Mittelteil schließen sich zwei seitliche Endteile an, welche im Bereich ihrer freien Enden ein Gleitteil aufweisen, das sei-nerseits von einem vom Fahrzeugaufbau in Fahrzeugquerrichtung wegragenden Aufnahmeteil gehalten ist. Die Halterung erfolgt derart, daß das Aufnahmeteil und das Gleitteil einander gabelar-tig umgreifen mit der w irkung, daß die Endteile sowohl in Fahr-zeuglängs- als auch in Fahrzeugquerrichtung verschiebbar sind.

Diese bekannte Halterung von Stoßfängern an Kraftfahrzeugka-rosserien ergibt eine verschiebemöglichkeit beim Einwirken von Aufprallenergie in Längs- und Querrichtung, sofern die Aufprall-energie ideal, z.B. in axialer Richtung zur Fahrzeuglängsachse auftrifft. wird diese Ideallinie verlassen, trifft beispielswei-se die Aufprallenergie im spitzen winkel zur Fahrzeuglängsachse auf den Stoßfänger auf, dann besteht die Gefahr der Verkantung in den Schiebeführungen und damit die Gefahr des Ausbrechens und der Zerstörung der Führungselemente.

In der EP-A- 0 158 236 ist ein weiterer Stoß-fänger dieser Art bekannt geworden, der ebenfalls eine begrenzte Verschiebemöglichkeit bei Einwirkung von Aufprallenergie in Fahrzeuglängs- und Farhzeugquerrichtung ermöglicht. Auch bei diesem Stoßfänger mit seiner Verschiebehalterung ist der oben geschilderte Nachteil der Zerstörungsmöglichkeit beim Auftreffen der Aufprallenergie im abweichenden Winkel von der Fahrzeuglängsachse gegeben.

Hier setzt die Erfindung ein, die es sich zur Aufgabe gestellt hat, die Befestigung eines Stoßfängers an Kraftfahrzeugkarosserien derart zu gestalten, daß die Nachteile des Standes der Technik ausgeschlossen werden, daß also eine Verschiebemöglichkeit des Stoßfängers auch dann gegeben ist, wenn die Aufprallenergie in einem von der Fahrzeuglängsachse abweichenden Winkel auf den Stoßfänger einwirkt. Erfindungsgemäß wird dazu vorgeschlagen, daß das stoßfängerseitige Halteteil zusätzlich als tellerförmige Scheibenhalterung mit verdickten Randbereichen ausgebildet ist, welche in einer käfigartigen Führung des karosserieseitigen Halteteils drehbeweglich gelagert ist.

Die Erfindung macht sich den Vorteil zunutze, daß die Richtung der durch die Aufprallenergie auf den Stoßfänger einwirkenden Kraft durch die gegebene Verdrehungsmöglichkeit jeweils automatisch derart justiert wird, daß ein Ausbrechen bzw. Zerstören der Halterung verhindert wird. Eine Verkantung innerhalb der Halterungen, wie sie beim Stand der Technik gegeben ist, wird durch die der axialen Verschiebemöglichkeit übergelagerte Möglichkeit der Drehbewegung verhindert.

Eine Stoßenergieaufnahme in Fahrzeuglängsrichtung wird durch die erfindungsgemäße Drehbeweglichkeit ebenfalls günstig beeinflußt, da der Krafteinwirkung der Reibungswiderstand der tellerförmigen Scheibenhalterung in der käfigartigen Führung entgegen steht und dadurch zusätzlich die Aufprallenergie verringert wird.

Ein weiterer Vorteil der erfindungsgemäßen Befestigungsart wird darin gesehen, daß der Angriffspunkt der Aufprallenergie nicht mittig in Fahrzeuglängs- bzw. Fahrzeugquerrichtung angreifen muß, vielmehr ermöglicht die tellerförmige Scheibenhalterung in der käfigartigen Führung mit der erfindungsgemäßen Drehbeweglichkeit die Aufnahme selbst unter spitzen Winkeln zur Fahrzeuglängsachse auftreffenden Aufprallenergien.

Es hat sich als zweckmäßig erwiesen, daß das karosserieseitige Halteteil anschließend an die käfigartige Führung für die tellerförmige Scheibenhalterung eine buchsenartige Führung für die Gleitbewegung eines Führungselementes in axialer Ver-schieberichtung trägt. Diese buchsenartige Füh-rung ist ein Bestandteil des Halteteils und vorteilhaft einstückig mit der käfigartigen Führung für die tellerförmige Scheibenhalterung ausgebildet. Das karosserieseitige Halteteil ist mit der Karosserie mechanisch, z.B. durch Schrauben, verbunden. Auch das stoßfängerseitige Halteteil mit seiner tel-lerförmigen Scheibenhalterung ist zweickmäßiger-weise einstückig ausgebildet und besitzt an seinen freien Enden Befestigungsmöglichkeiten zu den Endteilen. Sowohl das stoßfängerseitige Halteteil als auch das karosserieseitige Halteteil können zweckmäßigerweise aus Metall und-oder aus Kunststoff gebildet sein.

Das stoßfängerseitige Halteteil besitzt schließlich noch eine langlochartige Führung für die axiale Gleitbeweglichkeit des Führungselementes, welches das karosserieseitige Halteteil mit dem stoß-fängerseitigen Halteteil verbindet. Dieses Füh-rungselement kann beispielsweise ein in seinen Endbereichen gehalterter Stift, eine Schraube, ein Rohr usw. sein.

In der Zeichnung sind Ausführungsbeispiele der erfindungsgemässen Stoßfängerhalterung schematisch dargestellt; es zeigt:

Fig. 1 einen Schnitt durch das Endteil mit dem stoßfängerseitigen Halteteil und dem karosserieseitigen Halteteil.

Fig. 2 einen Schnitt durch das stoßfängerseitige Halteteil mit der langlochartigen Führung und dem Führungselement.

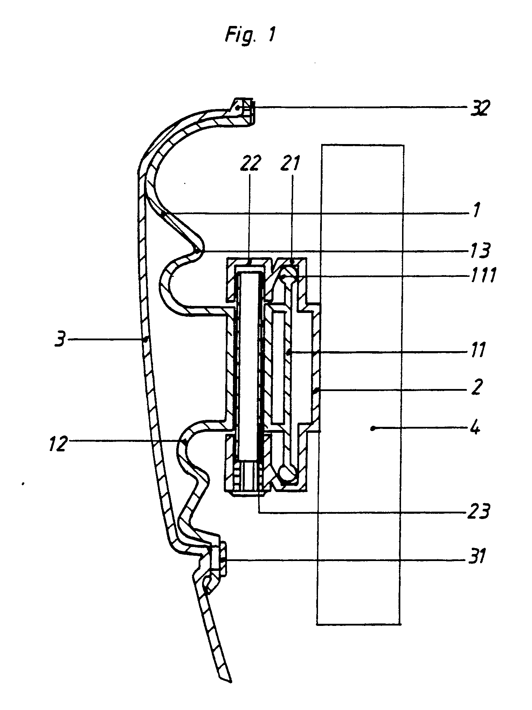

Fig. 1 zeigt den Schnitt durch das Endteil 3 mit dem stoßfängerseitigen Halteteil 1 und dem karosserieseitigen Halteteil 2. Das Endteil 3 ist mit dem stoßfängerseitigen Halteteil über die Verbindungsstellen 31, 32 verbunden. Die Verbindungsstellen 31, 32 können beispielsweise Schraubverbindungen sein.

Das stoßfängerseitige Halteteil 1 ist in der gezeigten Darstellung mit stoßenergieverzehrenden und rückstellbaren Biegezonen 12, 13 dargestellt. An seinem freien Ende besitzt das stoßfängerseitige Halteteil 1 die tellerförmige Scheibenhalterung 11, welche verdickte Randbereiche 111 aufweist. Mit diesen verdickten Wandbereichen 111 ist die tellerförmige Scheibenhalterung 11 drehbeweglich in der käfigartigen Führung 21 des karosserieseitigen Halteteils 2 gelagert. Das karosserieseitige Halteteil 2 ist über bekannte Verbindungsmittel mit der Karosserie 4 verspannt. Das karosserieseitige Halteteil 2 weist neben der käfigartigen Führung 21 die buchsenartige Führung 22 auf, die in der Zeichnung einstückig dargestellt sind. Die buchsenartige Führung 22 dient zur axialen Gleitbewegung des Führungselementes 23, mit dem das karosserieseitige Halteteil 1 in axialer Richtung zu dem karosserieseitigen Halteteil 2 verschieblich ist.

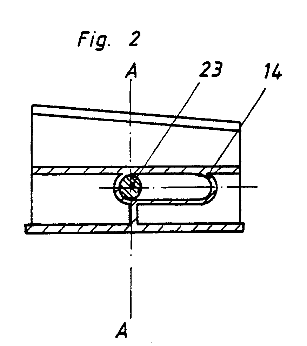

Unterhalb der buchsenartigen Führung 22 des karosserieseitigen Halteteils 2 ist die langlochartige Führung 14 des stoßfängerseitigen Halteteils 1 (Fig. 2) angeordnet. Die langlochartige Führung 14 des stoßfängerseitigen Halteteils 1 begrenzt auch die Längsverschiebemöglichkeit des Führungselementes 23 in der buchsenartigen Führung 22 des karosserieseitigen Halteteils 2.

Fig. 2 zeigt in einem Teilschnitt die langlochartige Führung 14 des stoßfängerseitigen Halteteils 1, in welcher das Führungselement 23 axial verschieblich gehaltert ist.

## Ansprüche

1. Stoßfänger für Kraftfahrzeuge mit einem quer zur Fahrzeuglängsachse verlaufenden Mittelteil und Befestigungselementen, die eine begrenzte Verschiebung des Mittelteils in der Fahrzeuglängsachse ermöglichen, wobei an den freien Enden des Mittelteils einstückig angeformte Endteile angeordnet sind, deren selbständige Befestigungselemente aus einem karosserieseitigen und aus einem stoßfängerseitigen Halteteil bestehen und eine begrenzte Verschiebemöglichkeit der Endstücke in Fahrzeuglängs- und Fahrzeugquerrichtung zulassen, dadurch gekennzeichnet, daß das stoßfängerseitige Halteteil (1) zusätzlich als tellerförmige Scheibenhalterung (11) mit verdickten Randbereichen (111) ausgebildet ist, welche in einer käfigartigen Führung (21) des karosserieseitigen Halteteils (2) drehbeweglich gelagert ist.

2. Stoßfänger nach Anspruch 1, dadurch gekennzeichnet, daß das karosserieseitige Halteteil (2) oberhalb der käfigartigen Führung (21) für die tellerförmige Scheibenhalterung (11) eine buchsenartige Führung (22) für die Gleitbewegung eines Führungselementes (23) in axialer Verschieberichtung trägt.

3. Stoßfänger nach Anspruch 1, dadurch gekennzeichnet, daß das stoßfängerseitige Halteteil (1) eine langlochartige Führung (14) für die axiale Gleitbeweglichkeit des Führungselementes (23) aufweist.

4. Stoßfänger nach Ansprüchen 1, 2 und 3, dadurch gekennzeichnet, daß das stoßfängerseitige Halteteil (1) einstückig ausgebildet ist.

5. Stoßfänger nach Ansprüchen 1, 2 und 3, dadurch gekennzeichnet, daß das karosserieseitige Halteteil (2) einstückig ausgebildet ist.

6. Stoßfänger nach Ansprüchen 1, 4 und 5, dadurch gekennzeichnet, daß das stoßfängerseitige Halteteil (1) und das karosserieseitige Halteteil (2) aus Metall und/oder aus Kunststoff besteht.

7. Stoßfänger nach Ansprüchen 1, 4 und 6, dadurch gekennzeichnet, daß das stoßfängerartige Halteteil (1) zum Endteil (3) energieverzehrende und rückstellbare Biegezonen (12, 13) aufweist.

## Claims

1. Bumper bar for motor vehicles with a centre section running at right angles to the vehicle's longitudinal axis and with fastening elements which allow limited movement of the centre section along the vehicle's longitudinal axis whereby the free ends of the centre section feature end pieces (3) moulded on in one piece whose independent fastening elements comprise a retainer (2, 1) on the body side and on the bumper-bar side and permit limited movement of the end pieces along the vehicle's longitudinal and transverse axes, characterised by the fact that the retainer (1) on the bumper-bar side is additionally shaped as a curved disk retainer (11) with thickened edges (111) supported in a cage-type guide (21) of the retaining piece (2) on the body side.

2. Bumper bar as described in claim 1, characterised by the fact that the retainer (2) on the body side above the cage-type guide (21) for the curved retainer bears a bush-type guide (22) for the sliding movement of a guide element (23) in axial direction.

3. Bumper bar as described in claim 1, characterised by the fact that the retainer (1) on the bumper-bar side exhibits an elongated hole guide (14) for the axial sliding movement of the guide element (23).

4. Bumper bar as described in claims 1, 2 and 3, characterised by the fact that the retainer (1) on the bumper-bar side is formed in one piece.

5. Bumper bar as described in claims 1, 2 and 3, characterised by the fact that the retainer (2) on the body side is formed in one piece.

6. Bumper bar as described in claims 1, 4 and 5, characterised by the fact that the retainer (1) on the bumper-bar side and the retainer (2) on the body side consists of metal and/or plastic.

7. Bumper bar as described in claims 1, 4 and 6, characterised by the fact that the retainer (1) on the bumper-bar side at the end piece (3) exhibits energy-absorbing and resilient bending zones (12, 13).

## Revendications

1. Pare-chocs pour véhicules automobiles avec une partie centrale située obliquement par rapport à l'axe longitudinal du véhicule et avec des éléments de fixation qui permettent un déplacement limité de la partie centrale dans l'axe longitudinal du véhicule, des pièces d'extrémité (3) formées d'une seule pièce étant disposées aux extrémités libres de la partie centrale, pièces d'extrémité dont les éléments de fixation autonomes sont constitués d'une pièce de retenue côté carrosserie (21) et d'une pièce de retenue côté pare-chocs (21) et offrent également une possibilité de déplacement limitée des pièces d'extrémité dans les sens longitudinal et transversal du véhicule, caractérisé par le fait que la pièce de retenue côté pare-chocs (1) est en outre structurée comme serrage à disque (11) en forme d'assiette avec zones marginales (111) épaissies, logé dans une glissière de guidage, en forme de cage (21), de la pièce de retenue côté carrosserie (2) de manière à pouvoir pivoter.

2. Pare-chocs selon demande 1, caractérisé par le fait que la pièce de retenue côté carrosserie (2) au-dessus de la glissière de guidage en forme de cage (21) pour le serrage à disque en forme d'assiette (11) supporte une glissière de guidage en forme de douille (22) pour le glissement d'un élément de guidage (23) dans le sens de déplacement axial.

3. Pare-choc selon demande 1, caractérisé par le fait que la pièce de retenue côté pare-chocs (1) présente une glissière de guidage en forme de trou oblong (14) pour le glissement axial de l'élément de guidage (23).

4. Pare-chocs selon demandes 1, 2 et 3, caractérisé par le fait que la pièce de retenue côté pare-chocs (1) est formée d'une seule pièce.

5. Pare-chocs selon demandes 1, 2 et 3, caractérisé par le fait que la pièce de retenue côté carrosserie (2) est formée d'une seule pièce.

6. Pare-chocs selon demandes 1, 4 et 5, caractérisé par le fait que la pièce de retenue côté pare-chocs (1) et la pièce de retenue côté carrosserie (2) sont faites de métal et/ou de plastique.

7. Pare-chocs selon demandes 1, 4 et 6, caractérisé par le fait que la pièce de retenue côté pare-chocs (1) présente, au niveau de la pièce d'extrémité (3) des zones de flexion consommant de l'énergie et susceptibles d'être redressées (12, 13).

Fig. 1

Fig. 2